Europäisches Patentamt

European Patent Office

Office européen des brevets

(19)

(11) Veröffentlichungsnummer : **0 032 229**
**B1**

(12)

# EUROPÄISCHE PATENTSCHRIFT

(45) Veröffentlichungstag der Patentschrift :
14.09.83

(21) Anmeldenummer : 80108125.8

(22) Anmeldetag : 22.12.80

(51) Int. Cl.³ : **H 04 B    3/46**

(54) **Übertragungsstrecke für digitale Signale.**

(30) Priorität : 07.01.80 DE 3000371

(43) Veröffentlichungstag der Anmeldung :
22.07.81 Patentblatt 81/29

(45) Bekanntmachung des Hinweises auf die Patenterteilung : 14.09.83 Patentblatt 83/37

(84) Benannte Vertragsstaaten :
AT BE CH DE FR GB IT LI LU NL SE

(56) Entgegenhaltungen :
DE B 1 269 671
DE B 2 004 810
DE B 2 321 841
US A 3 758 728

(73) Patentinhaber : **SIEMENS AKTIENGESELLSCHAFT**
**Berlin und München Wittelsbacherplatz 2**
**D-8000 München 2 (DE)**

(72) Erfinder : **Braun, Ewald, Ing. grad.**
**Plattlinger Strasse 63**
**D-8000 München 71 (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Übertragungsstrecke für digitale Signale

Die Erfindung betrifft eine Übertragungsstrecke für digitale Signale mit einem Leitungsendgerät, das einen an eine digitale Schnittstelle angeschlossenen Sendeteil enthält, der eine Reihenschaltung aus einer sendeseitigen Schnittstellenschaltung, einem Leitungscodierer und einem Sendeverstärker mit an eine abgehende Leitung angeschlossenem Ausgang und gegebenenfalls einen Verwürfler umfaßt, das einen an eine ankommende Leitung angeschlossenen Empfangsteil enthält, der die Reihenschaltung eines Empfangsregenerators, eines Leitungsdecodierers, einer empfangsseitigen Schnittstellenanordnung mit an die digitale Schnittstelle angeschlossenem Ausgang und gegebenenfalls einen Entwürfler umfaßt, das außerdem zwischen sende- und empfangsseitiger Schnittstellenschaltung eine schaltbare Verbindung enthält, mit einem einen Sendeteil und einen Empfangsteil enthaltenden Ortungsgerät, das an das Leitungsendgerät angeschlossen ist, und mit wenigstens einem speisenden Zwischenregenerator, der eine Einrichtung zur Fernspeisung eines Teils der angeschlossenen Übertragungsstrecke, eine Einrichtung zum Schalten einer Verbindung zwischen Hin- und Rückrichtung und eine Einrichtung zur Regeneration der zu übertragenden digitalen Signale enthält.

Übertragungsstrecken für digitale Signale haben in bestimmten Abständen in die Kabelstrecke eingefügte Zwischenregeneratoren, die jeweils einen Regenerator für jede Übertragungsrichtung enthalten und zur amplituden- und zeitmäßigen Regenerierung der einzelnen Impulse der übertragenen digitalen Signale dienen. Diese Zwischenregeneratoren werden über die Kabelstrecke von den Leitungsendgeräten her ferngespeist. Wegen der begrenzten Fernspeiseleistung ist es bei längeren Kabelstrecken notwendig, zusätzlich zu den speisenden Leitungsendgeräten wenigstens einen speisenden Zwischenregenerator vorzusehen, durch den ein Teil der angeschlossenen Übertragungsstrecke ferngespeist werden kann. Die Übertragungsstrecke ist dadurch in wenigstens drei voneinander getrennte Fernspeisestrecken unterteilt.

Bei Auftreten von Störungen in der Übertragung der digitalen Signale ist es notwendig, die an unterschiedlichen Orten befindliche Teile der Übertragungsstrecken zu untersuchen. Im Hinblick auf eine schnelle Fehlereingrenzung ist es dabei zweckmäßig, für jeden Fernspeiseabschnitt ein Ortungsgerät vorzusehen, das ein Ortungssignal in den betrachteten Fernspeiseabschnitt einspeist. Dieses Ortungssignal wird von den Übertragungeinrichtungen im Fernspeiseabschnitt übertragen, wobei jeweils wenigstens eine schaltbare Verbindung zwischen Hin- und Rückrichtung am Anfang und am Ende des Fernspeiseabschnittes, beispielsweise in einem Leitungsendgerät und in einem Zwischenregenerator, geschaltet wird. Über die so entstandene Schleife gelangt das Ortungssignal zum Empfangsteil des Ortungsgerätes und kann dort durch Vergleich mit dem ausgesendeten Signal auf Übertragungsfehler untersucht werden.

Übertragungsstrecken für digitale Signale unterliegen internationalen Empfehlungen. Diese gelten insbesondere für die Schnittstellen zwischen den Multiplexgeräten und den Leitungsendgeräten, gelegentlich auch für die von Leitungsendgerät zur Leitungsendgerät gebildete Übertragungsstrecke. Das vom Ortungsgerät abgegebene Ortungssignal muß bei Anschluß des Ortungsgerätes an das Leitungsendgerät über die digitale Schnittstelle den Schnittstellenbedingungen entsprechen. Im Hinblick auf die zusätzlichen Forderungen hinsichtlich Gleichstromfreiheit im Übertragungssignal und hinsichtlich der Übertragungskapazität wird das Übertragungssignal im an die Schnittstelle angeschlossenen Leitungsendgerät umcodiert und gegebenenfalls auch verwürfelt. Dadurch ergibt sich auf der Übertragungsstrecke und damit auch im speisenden Zwischenregenerator eine Signalform, die der an der Schnittstelle nicht mehr entspricht. Daraus wiederum ergibt sich die Notwendigkeit, an der Schnittstelle zwischen Multiplex und Leitungsendgerät und im speisenden Zwischenregenerator unterschiedliche Ortungssignale zu verwenden und dafür unterschiedliche Ortungsgeräte vorzusehen oder, wie es für das Übertragungssystem PCM 30 aus der « Siemens-Zeitschrift » 49 (1975) Heft 7, s. 461 bis 464, bekannt ist, ein einziges Ortungsgerät zu benutzen und dabei zur Vermeidung von Fehlern während des Ortungsvorgangs dem Leitungsendgerät ein vom Ortungsgerät geliefertes Kriterium zum Abschalten des HDB3-Codierers und des entsprechenden Decodierers zu übermitteln.

Die Aufgabe der Erfindung besteht nun darin, eine Möglichkeit zur Verwendung eines einzigen Ortungsgerätes mit einem einheitlichen Ortungssignal zu schaffen.

Erfindungsgemäß wird die Aufgabe dadurch gelöst, daß Sende- und Empfangsteil des Ortungsgerätes im Leitungsendgerät an einer Stelle angeschlossen sind, an der das zu übertragende digitale Signal eine Form aufweist, die auch im speisenden Zwischenregenerator auftritt, und zwar indem « der Ausgang des Sendeteils des Ortungsgerätes mit dem Eingang des Leitungsdecodierers und der Eingang des Empfangsteils des Ortungsgerätes mit dem Ausgang des Empfangsregenerators verbunden ist, » und daß die Verbindung zwischen sende- und empfangsseitiger Schnittstellenschaltung für das Ortungssignal durchlässig ist, so daß der Signalweg für das Ortungssignal vom Sende- zum Empfangsteil des Ortungsgerätes über entlang der Übertragungsstrecke geschaltete Verbindungen zwischen Hin- und Rückrichtung geschlossen werden kann.

Als besonderer Vorteil ergibt sich ein einfacher Aufbau des Ortungsgerätes, da das Ortungssignal in der gewünschten Form direkt erzeugt werden kann, ohne daß eine Verwürfelung oder eine Umcodierung berücksichtigt werden muß.

Die Erfindung soll im folgenden anhand der Zeichnung näher erläutert werden. In der Zeichnung zeigt

Figur 1 ein an eine digitale Schnittstelle angeschlossenes Leitungsendgerät mit angeschlossenem Ortungsgerät nach dem Stand der Technik und

Figur 2 ein an eine digitale Schnittstelle angeschlossenes Leitungsendgerät einer digitalen Übertragungsstrecke mit einem erfindungsgemäß angeschlossenem Ortungsgerät.

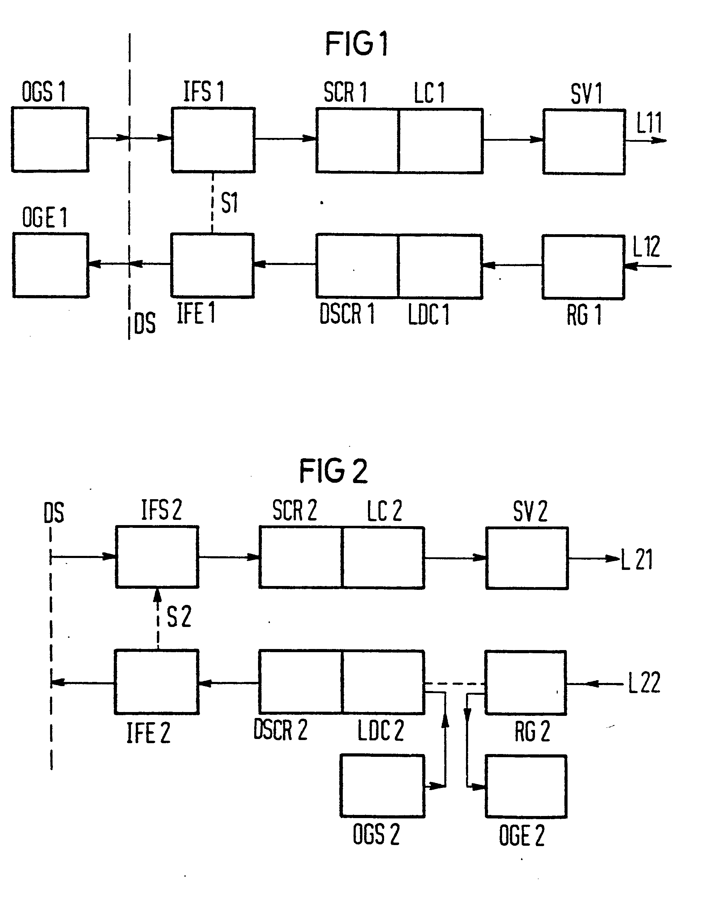

In der Fig. 1 ist mit DS die digitale Schnittstelle bezeichnet, die zwischen dem Multiplexteil und dem Leitungsteil des Übertragungssystems vorgeschrieben ist. Das Leitungsendgerät enthält eine erste Reihenschaltung, die aus einer an die digitale Schnittstelle angeschlossenen sendeseitigen Schnittstellenschaltung IFS1, einem Verwürfler SCR1, einem Leitungscodierer LC1 und einem Sendeverstärker SV1 besteht, wobei der Ausgang des Sendeverstärkers mit dem Leitungsanschluß L11 für die eine Übertragungseinrichtung verbunden ist. Der Empfangsteil des Leitungsendgerätes enthält eine zweite Reihenschaltung, die aus einem mit dem Leitungsanschluß L12 für die Rückrichtung verbundenen Empfangsregenerator RG1, einem Leitungsdecodierer LDC 1, einem Entwürfler DSCR1 und einer empfangsseitigen Schnittstellenanordnung IFE1 besteht. Der Ausgang der empfangsseitigen Schnittstellenanordnung ist an die digitale Schnittstelle DS angeschlossen. An die digitale Schnittstelle sind weiterhin angeschlossen der Sendeteil OGS1 des Ortungsgerätes und dessen Empfangsteil OGE1.

Die Funktion des Leitungsendgerätes besteht darin, die an der digitalen Schnittstelle auftretenden Signale in eine Form umzuwandeln, die mit vergleichsweise geringem Aufwand über die Übertragungsstrecke übertragen werden und dabei leicht überwacht werden kann, geringe Störungen in parallelen Einrichtungen verursacht und die Übertragungskapazität der Kabelstrecke optimal nutzt. Zu diesem Zweck sind im Sende- und Empfangsteil des Leitungsendgerätes jeweils eine digitale Schnittstellenschaltung IFS1, IFE1 vorgesehen, die zur Anpassung der Amplitude und der Form der übertragenen Signale dienen und gegebenenfalls auch eine Anordnung zur Taktableitung enthalten. Im Hinblick auf die Übertragung von gleichstrombehafteten Signalen werden die übertragenen Signale im Sendeteil des Leitungsendgerätes in einem Verwürfler SCR1 verwürfelt. Die Verwürfelung besteht dabei derin, daß eine Pseudozufallsfolge erzeugt und zum übertragenen Signal modulo-2 addiert wird. Zur optimalen Ausnutzung der Übertragungskapazität der Kabelstrecke ist weiterhin ein Leitungscodierer LC1 im Sendeteil des Leitungsendgerätes vorgesehen. Durch diesen Leitungscodierer erfolgt eine Umcodierung des zu übertragenden digitalen Signals, beispielsweise in ein Mehrstufensignal, um die Übertragungsgeschwindigkeit zu senken, oder in einen Code mit höherer Redundanz zur Sicherung der Übertragungsqualität und aus energetischen Gründen. An den Leitungscodierer LC1 schließt sich der Sendeverstärker SV1 an, der die zum Betrieb der Strecke nötige Ausgangsleistung erzeugt.

Der Empfangsteil des Leitungsendgerätes ist in seinem Aufbau dem Sendeteil weitgehend analog, eingangsseitig ist ein Empfangsregenerator RG1 für die empfangenen digitalen Signale mit einem Entzerrer zur Aufhebung des Kabelfrequenzganges, einer Taktableitung sowie einem Amplituden- und Zeitgenerator vorgesehen. Der Leitungsdecodierer LDC1 übernimmt die Rückwandlung der übertragenen digitalen Signal. Der Entwürfler DSCR1 dient zur Aufhebung der Verwürfelung im Übertragungssignal, der Aufbau dieses Entwürflers ist dem des sendeseitigen Verwürflers völlig gleich.

Die zur Anpassung der Signalamplitude und der Signalform erforderliche empfangsseitige Schnittstellenschaltung IFE1 enthält zusätzlich eine schaltbare Verbindung S1 zur sendeseitigen Schnittstellenanordnung IFS1. Durch diese Verbindung ist es möglich, eine Schleife zwischen Sende- und Empfangsteil zu bilden und dadurch eine erste Schleife für das über die digitale Schnittstelle übertragene Ortungssignal zu schließen.

Weitere schaltbare Schleifen zur Ortung befinden sich in den auf der Strecke eingesetzten Zwischenregeneratoren. Die Schleifen werden im Fehlerfalle nacheinander ferngesteuert geschlossen, so daß sich nacheinander ein Schleifenschluß für das Ortungssignal in den einzelnen Zwischenregeneratoren ergibt. Dadurch ist es möglich, einzelne Kabelabschnitte mit dem jeweils angeschlossenen Zwischenregenerator auf ihre Funktion hin zu prüfen.

Die in der Übertragungsstrecke eingefügten Zwischenregeneratoren enthalten für jede Übertragungseinrichtung einen Regenerator, der dem Empfangsregenerator RG1 entspricht. Wegen ihrer großen räumlichen Ausdehnung kann nun eine Übertragungsstrecke mehrere Fernspeiseabschnitte haben, so daß zusätzliche Ortungsgeräte an den einzelnen auf der Strecke befindlichen Fernspeisestellen erforderlich sind. Entsprechend der Lehre einer parallelen Patentenanmeldung ist es dabei nicht erforderlich, an diesen Fernspeisestellen Leitungsendgeräte vorzusehen. Anstelle dieser Leitungsendgeräte ist lediglich ein Zwischenregenerator durch eine zusätzliche Fernspeiseeinrichtung zu ergänzen. In diesem Zwischenregenerator fehlen die im Empfangsteil des Leitungsendgerätes vorgesehenen Einrichtungen für die Decodierung des Signals und dessen Entwürfelung sowie die entsprechende Schnittstellenanordnung. Wie bereits eingangs erwähnt, wäre deshalb in diesem Fall ein anderes Ortungsgerät vorzusehen, das ein verwürfeltes Signal im Leitungscode erzeugen müßte.

In der Fig. 2 ist das Ortungsgerät an das Leitungsendgerät an einer Stelle angeschlossen, an der das zu übertragende digitale Signal eine Form aufweist, die auch in einem speisenden Zwischenregenerator auf der Übertragungsstrecke auftritt. Das Leitungsendgerät entsprechend der Fig. 2 entspricht in seinem Aufbau völlig dem der Fig. 1, der Sendeteil des Leitungsendgerätes enthält also auch eine Reihenschaltung aus einer sendeseitigen Schnittstellenanordnung IFS2, einem Leitungscodierer LC2 und einem Sendeverstärker SV2 mit Anschluß an die Übertragungsleitung L21. Der Empfangsteil des Leitungsendgerätes enthält ebenfalls eine Reihenschaltung, die aus einem mit den Leitungsanschluß L22 für die Rückrichtung verbundenen Endregenerator RG2, einem Decodierer LDC2 für den Leitungscode, einem Entwürfler DSCR2 und einer empfangsseitigen Schnittstellenschaltung IFE2 besteht, die ebenfalls eine Verbindung S2 zur sendeseitigen Schnittstellenschaltung aufweist. Abweichend von der Fig. 1 ist in der Fig. 2 jedoch der Sendeteil OGS2 des Ortungsgerätes über einen in der Zeichnung nicht dargestellten Umschalter mit dem Eingang des Decodierers für den Leitungscode LDC2 verbunden, außerdem ist über einen weiteren nicht dargestellten Umschalter der Ausgang des Endregenerators RG2 im Ortungsfalle mit dem Eingang des Empfangsteils OGE2 des Ortungsgerätes verbunden. Im Ortungsfall ist die Verbindung S2 zwischen den beiden Schnittstellenschaltungen dauernd geschlossen, so daß das Ortungssignal nach Durchlaufen des Decodierers LDC2 und des Entwürflers DSR2 sowie der Schnittstellenschaltungen und des Sendeteils an die Übertragungsstrecke L21 gegeben wird. Sendeteil OGS2 und Empfangsteil OGE2 dieses Ortungsgerätes sind nun für die Erzeugung bzw. Verarbeitung eines Ortungssignals eingerichtet, wie es auf der Übertragungsstrecke in den einzelnen Zwischenregeneratoren auftritt. Dadurch ist es möglich, ein derartiges Ortungsgerät auch in den speisenden Zwischenregeneratoren in den von den Leitungsendgeräten unabhängigen Fernspeiseabschnitten vorzusehen.

## Anspruch

Übertragungsstrecke für digitale Signale mit einem Leitungsendgerät, das einen an eine digitale Schnittstelle (DS) angeschlossenen Sendeteil enthält, der eine Reihenschaltung aus einer sendeseitigen Schnittstellenschaltung (IFS2), einem Leitungscodierer (LC2) und einem Sendeverstärker (SV2) mit an eine abgehende Leitung (L21) angeschlossenem Ausgang und gegebenenfalls einen Verwürfler (SCR2) umfaßt, das einen an eine ankommende Leitung (L22) angeschlossenen Empfangsteil enthält, der die Reihenschaltung eines Empfangsregenerators (RG2), eines Leitungsdecodierers (LDC2), einer empfangsseitigen Schnittstellenanordnung (IFE2) mit an die digitale Schnittstelle (DS) angeschlossenem Ausgang und gegebenenfalls eines Entwürflers (DSCR2) umfaßt, das außerdem zwischen sende- und empfangsseitiger Schnittstellenschaltung (IFS2, IFE2) eine schaltbare Verbindung (S2) enthält, mit einem einen Sendeteil (OGS2) und einen Empfangsteil (OGE2) enthaltenden Ortungsgerät, das an das Leitungsendgerät angeschlossen ist, und mit wenigstens einem speisenden Zwischenregenerator, der eine Einrichtung zur Fernspeisung eines Teils der angeschlossenen Übertragungsstrecke, eine Einrichtung zum Schalten einer Verbindung zwischen Hin- und Rückrichtung und eine Einrichtung zur Regeneration der zu übertragenden digitalen Signale enthält, dadurch gekennzeichnet, daß Sende- und Empfangsteil des Ortungsgerätes (OGS2, OGE2) im Leitungsendgerät an einer Stelle angeschlossen sind, an der das zu übertragende digitale Signal eine Form aufweist, die auch im speisenden Zwischenregenerator auftritt, und zwar indem der Ausgang des Sendeteils (OGS2) des Ortungsgerätes mit dem Eingang des Leitungsdecodierers (LDC2) und der Eingang des Empfangsteils (OGE2) des Ortungsgerätes mit dem Ausgang des Empfangsregenerators (RG2) verbunden ist, und daß die Verbindung zwischen sende- und empfangsseitiger Schnittstellenschaltung (IFS2, IFE2) für das Ortungssignal durchlässig ist, so daß der Signalweg für das Ortungssignal vom Sende- zum Empfangsteil des Ortungsgerätes über entlang der Übertragungsstrecke geschaltete Verbindungen zwischen Hin- und Rückrichtung geschlossen werden kann.

## Claim

Transmission path for digital signals with a line terminal device, which includes a transmitting unit connected to a digital interface (DS) and which comprises a series connection, which consists of a transmitting-end interface circuit (IFS2), a line coder (LC2) and a transmitting amplifier (SV2), with an output connected to an outgoing line (L21), and possibly a scrambler (SCR2), and which line terminal device includes a receiving unit connected to an incoming line (L22) and which comprises the series connection of a receiving regenerator (RG2), a line decoder (LDC2), a receiving-end interface arrangement (IFE2), with an output connected to the digital interface (DS), and possibly of a descrambler (DSCR2), which line terminal device further includes a switchable connection (S2) between the transmitting-side and receiving-side interface circuit (IFS2, IFE2), and with a location device which includes a transmitting unit (OGS2) and a receiving unit (OGE2) and which is connected to the line terminal device, and with at least one feeding intermediate regenerator which includes a device for remote-feeding a section of the connected transmission path, a device for switching a connection between forward and return direction and a device for regenerating the digital signals to be transmitted, characterised in that the transmitting and receiving unit of the location device (OGS2, OGE2) are connected to a point in the line terminal device where the digital signal to be transmitted has a shape which occurs in the feeding intermediate regenerator, namely in that the output of the transmitting unit (OGS2) of the location device is connected to the input of the line decoder (LDC2) and the input of the receiving unit (OGE2) of the location device is connected to the output of the receiving regenerator (RG2), and that the connection between transmitting-side and receiving-side interface circuit (IFS2, IFE2) is transparent to the location signal, so that the signal path for the location signal can be closed from the transmitting to the receiving unit of the location device via connections between the forward and return direction which are switched along the transmission path.

## Revendication

Ligne de transmission pour des signaux numériques avec un appareil d'extrémité de ligne, qui comporte une partie émission reliée à un intervalle numérique (DS) et comprenant un circuit série constitué par un circuit d'interface (IFS2) situé côté émission, par un codeur de ligne (LC2) et par un amplificateur d'émission (SV2) à sortie reliée à une ligne de départ, et éventuellement par un embrouilleur (SCR2), qui comporte une partie réception reliée à une ligne d'arrivée (L22) et comportant un circuit série constitué par un régénérateur de réception (RG2), par un décodeur de ligne (LDC2), par un dispositif d'interface (IFE2) situé côté réception et à sortie reliée à l'interface numérique (DS), et éventuellement un désembrouilleur (DSCR2), qui comporte en outre, entre le circuit d'interface (IFS2, IFE2) situé du côté émission et du côté réception, une liaison commutable (S2), avec un appareil de localisation contenant une partie émission (OGS2) et une partie réception (OGE2) et relié à l'appareil d'extrémité de ligne et avec au moins un régénérateur intermédiaire d'alimentation, qui comporte un dispositif pour la téléalimentation d'une partie de la ligne de transmission branchée, un dispositif pour établir une liaison entre la direction aller et retour et un dispositif pour régénérer les signaux numériques à transmettre, caractérisée par le fait que la partie émission et la partie réception de l'appareil de localisation (OGS2, OGE2) sont reliées dans l'appareil d'extrémité de ligne en un emplacement auquel le signal numérique à transmettre présente une forme qui apparaît également dans le régénérateur intermédiaire d'alimentation, et plus particulièrement de façon que la sortie de la partie émission (OGS2) de l'appareil de localisation soit reliée à l'entrée du décodeur de lignes (LDC2) et l'entrée de la partie réception (OGE2) de l'appareil de localisation soit reliée à la sortie du régénérateur d'entrée (RG2), et que la liaison entre circuit d'interface côté émission et côté réception (IFS2, IFE2) soit passant de manière que la voie des signaux pour le signal de localisation de la partie émission à la partie réception de l'appareil de localisation puisse être fermée, entre la direction aller et retour, par l'intermédiaire de liaisons établies le long de la ligne de transmission.

## FIG 1

OGS 1  IFS 1  SCR 1  LC 1  SV 1  L11

S1

OGE 1  IFE 1  DSCR 1  LDC 1  RG 1  L12

DS

## FIG 2

DS  IFS 2  SCR 2  LC 2  SV 2  L 21

S 2

IFE 2  DSCR 2  LDC 2  RG 2  L 22

OGS 2  OGE 2